# EUROPEAN PATENT APPLICATION

(11) **EP 4 494 510 A1**
(43) Date of publication of application: **22.01.2025**
(21) Application number: 24178302.6
(22) Date of filing: 27.05.2024
(51) Int. Cl.: A43B 13/04, A43B 13/12, B29D 35/06, B29D 35/12

(54) **METHOD FOR MAKING AN INSOLE OF SPORTS FOOTWEAR, METHOD FOR MAKING SPORTS FOOTWEAR, INSOLE AND SPORTS FOOTWEAR**

(30) Priority: 19.07.2023 IT 202300015117
(71) Applicant: Plastimedia S.r.l., 31041 Cornuda (TV) (IT)
(72) Inventor: VIDOTTO, Alessio, I-31041 Cornuda, TREVISO (IT); GATTO, Adriano, I-31041 Cornuda, TREVISO (IT); VIDOTTO, Valeria, I-31041 Cornuda, TREVISO (IT)
(74) Representative: Mitola, Marco

(57) **Abstract**

A method for making an insole (20) of sports footwear (4), by means of injection moulding, comprising the steps of:
- arranging a mould for said insole (20) delimiting a cavity apt to contain the insole (20) to be moulded, said cavity being counter-shaped with respect to said insole (20) and having a mainly planar extension parallel to a horizontal reference plane (P-P),
- injecting a thermoplastic material inside said cavity,
- injecting an expanding agent in said cavity so as to cause the expansion of the injected thermoplastic material which fills said cavity,
- wherein the expanding agent causes the creation of an internal alveolar structure of the injected insole (20) comprising a plurality of cavities or bubbles (28).

## Description

### FIELD OF APPLICATION

The present invention relates to a method for making an insole of sports footwear, a method for making of sports footwear, an insole, and related sports footwear.

### PRIOR ART

First of all, it should be noted that in the context of the present patent application, the term sports footwear is to be understood in a broad sense, including, by way of non-exclusive example, hiking footwear, running footwear as well as ski boots, ski-mountaineering boots and the like. Nevertheless, the present invention may also be implemented in different fields, not purely sports ones.

As is known, in the field of sports footwear, the making of internal removable wedges or insoles, for example for ski boots or ski mountaineering boots made of two-component expanded thermosetting material, of various densities, elasticities, and hardness, is envisaged.

These known wedge solutions may also envisage supports (fabrics - cork - polyurethane films) to hold the parts together in case of structural breakages.

The advantages and disadvantages of these known products are listed below.

In the case of wedges made of two-component expanded thermosetting polyurethane, they are lightweight and also have good thermal insulation, which is particularly in demand and desired in the case of ski boots.

On the other hand, these solutions are structurally fragile, typical of expanded polyurethane, and require a costly/polluting production process.

Moreover, they require the trimming of burrs and any anti-breakage support fabrics, as well as fixing the wedge to the shell by at least one screw to avoid breakage.

This results in a rather limited possibility of recycling the product, a high product cost, and reduced stability within the shell.

Furthermore, the use of over-injection, bi-injection and co-injection processes is limited and complex.

It is also known in the art to make wedges or insoles of expanded polystyrene.

This solution is lightweight and also ensures good thermal insulation and 100% recyclability.

However, disadvantages include limited and difficult use in over-injection, bi-injection, and co-injection processes.

Furthermore, the cost of the product is high, and there is also a certain structural fragility.

Finally, the technique of making wedges moulded in rigid thermoplastic material is known, with a medium-high hardness normally not lower than 45 SHD.

The main advantages of such solutions include low cost, 100% recyclability, simplicity of the productive process, and structural strength.

Disadvantages include the high costs of moulds, poor thermal insulation and the limitation in thermoplastic hardnesses that impose the exclusive use of rigid materials.

Finally, there is the limitation of very restricted and difficult use in over-injection, bi-injection, co-injection processes due to the drains that would fill up.

Therefore, the solutions of the prior art do not allow for a wedge and/or footwear that is inexpensive and simple to make, but at the same time strong and lightweight, and that ensures good thermal insulation.

### DISCLOSURE OF THE INVENTION

The need to solve the drawbacks and limitations mentioned with reference to the prior art is therefore felt.

This need is satisfied by a method for making an insole of sports footwear according to claim 1, a method for making sports footwear according to claim 9, an insole according to claim 11, and related sports footwear according to claim 15.

### DESCRIPTION OF THE DRAWINGS

Further features and advantages of the present invention will become more apparent from the following detailed description of preferred, non-limiting embodiments thereof, wherein:

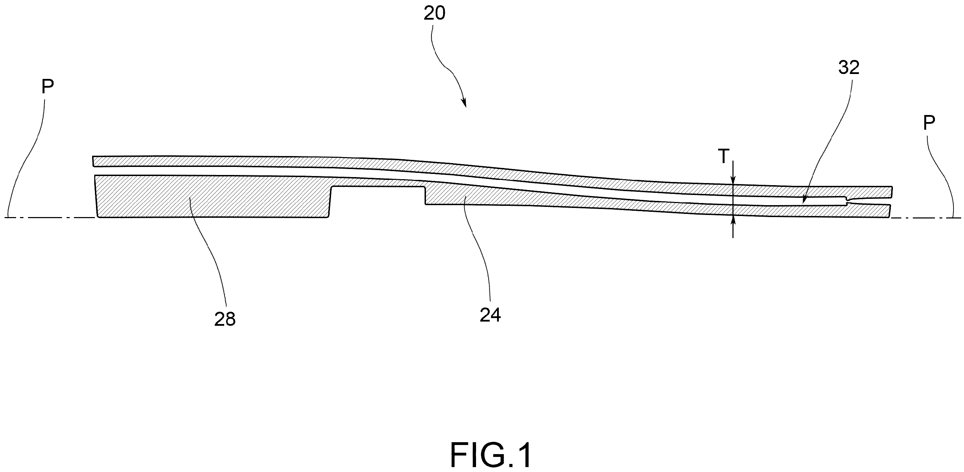

Fig. 1 is a sectional view of an insole according to a possible embodiment of the present invention;

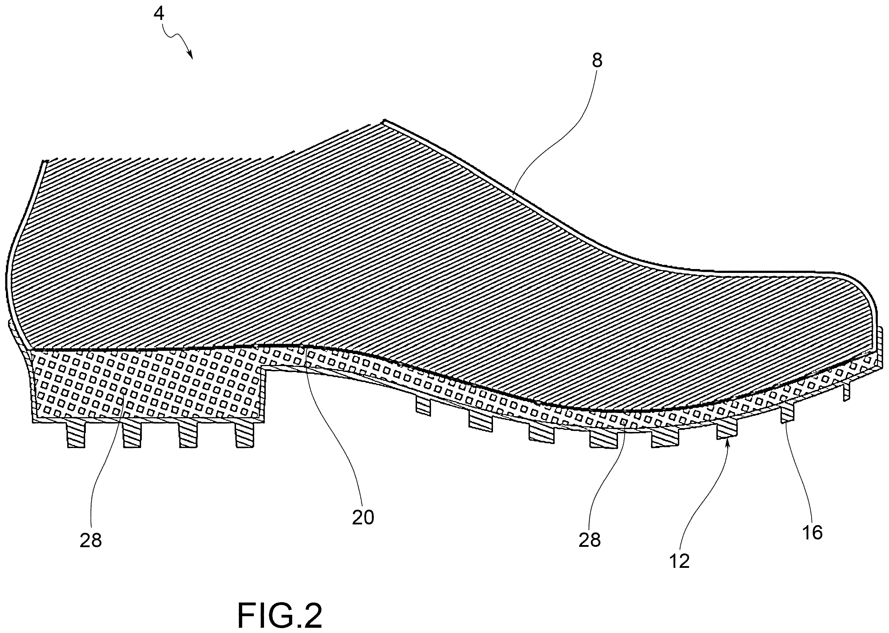

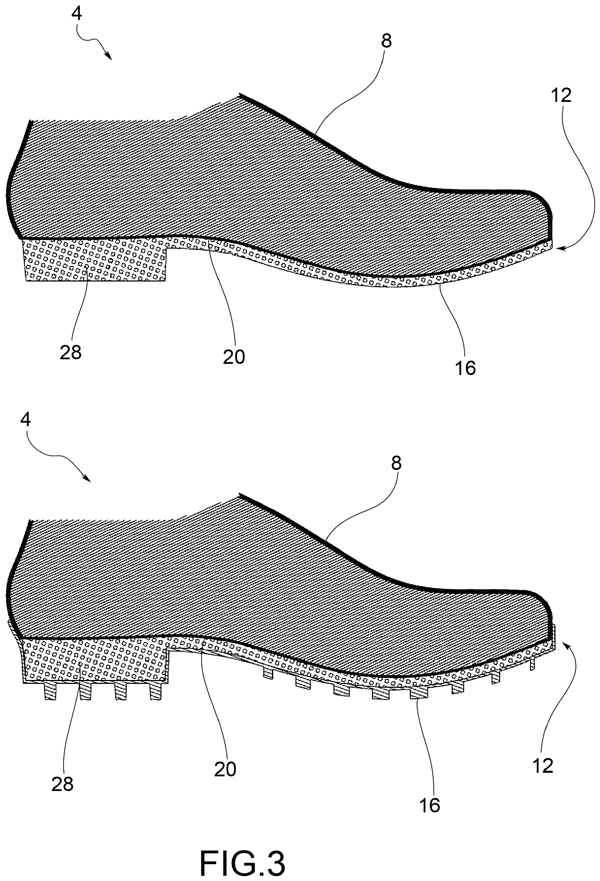

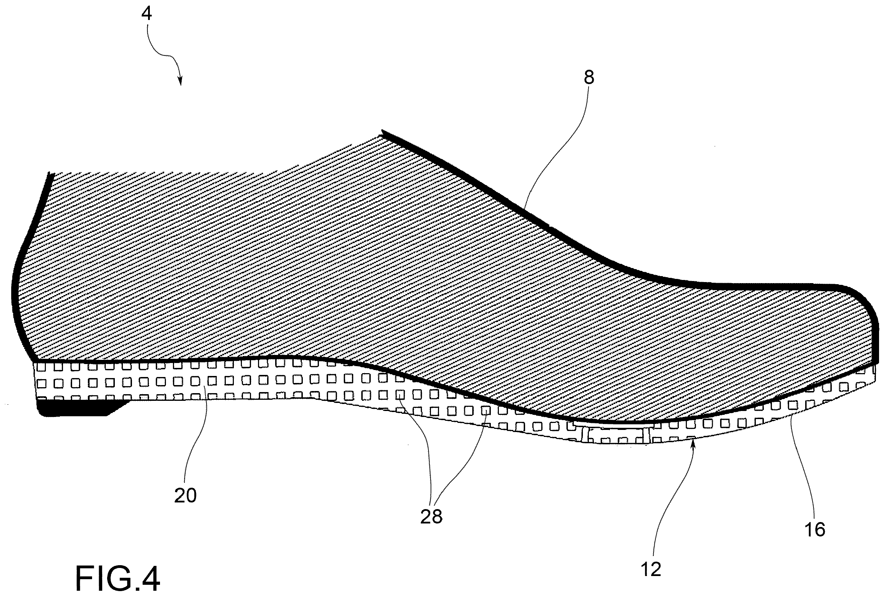

Fig. 2-4 are sectional views of sports footwear according to possible embodiments of the present invention;

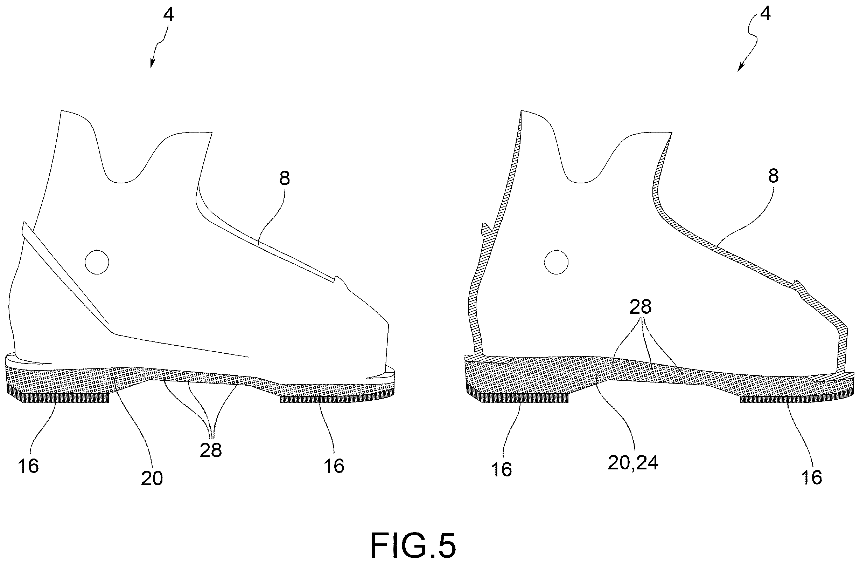

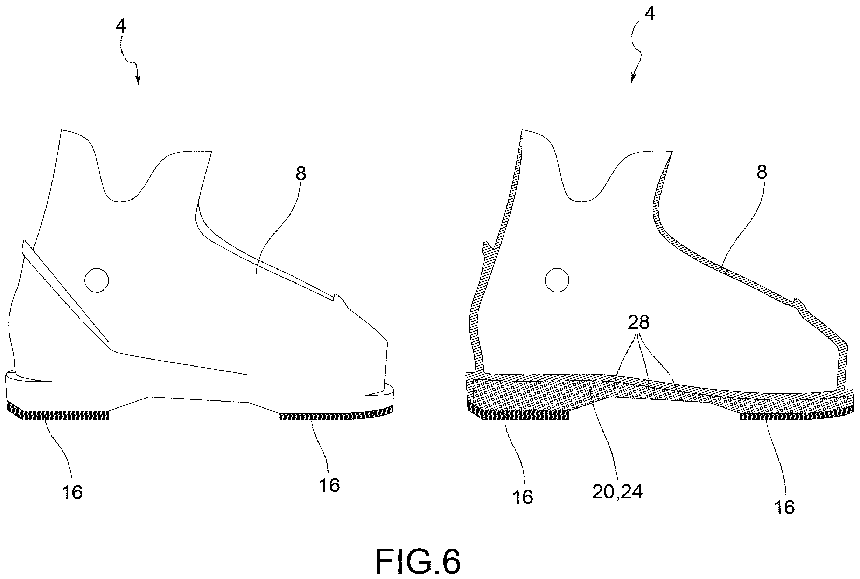

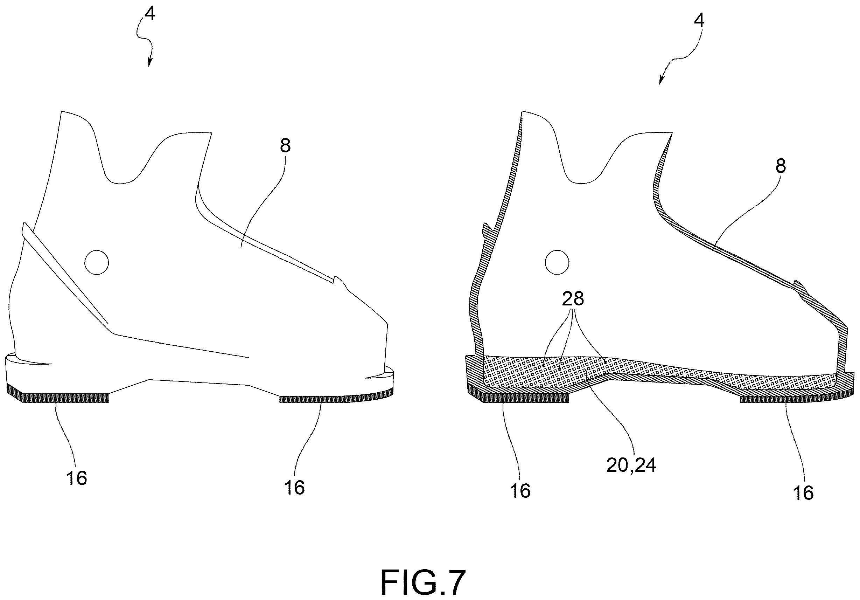

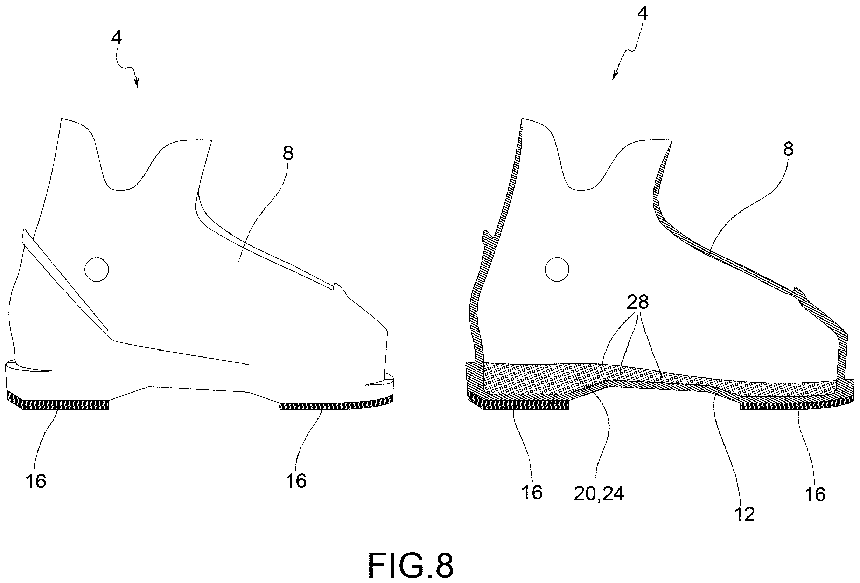

Fig. 5-8 are side and cross-sectional views of sports footwear, such as ski boots, according to possible embodiments of the present invention.

Elements or parts of elements common to the embodiments described hereinafter will be indicated with the same numerical references.

### DETAILED DESCRIPTION

With reference to the aforesaid figures, an overall schematic view of sports footwear has been globally indicated with 4.

For the purposes of the present invention, the type of sports footwear, which may include hiking footwear, running footwear but also ski or ski-mountaineering boots and the like is not relevant. Obviously, the present invention may also be implemented in different fields and not purely sports ones.

The sports footwear 4 typically comprises an upper or shell 8 and a sole 12, possibly provided with a tread 16.

In general, an upper refers to flexible or non-rigid sports footwear, such as hiking boots, running shoes, cycling shoes, etc. On the other hand, the term shell refers to ski boots or ski-mountaineering boots and the like.

In any case, the upper or shell 8 is configured to accommodate the user's foot, and the sole 12 constitutes an interface between the user's foot and the ground.

Between the sole 12 and the upper or shell 8, on the side opposite to the tread 16, an insole 20 is interposed, which is also called a wedge.

The insole or wedge 20 constitutes an interface element between the bottom of the user's foot and the sole 12, on the inner side thereof, opposite to the tread 16.

The insole 20 comprises a body 24 having a main planar extension parallel to a horizontal reference plane P-P and having an internal alveolar structure comprising a plurality of cavities or bubbles 28, wherein the body 24 is made of an injected and expanded thermoplastic material.

According to an embodiment, said cavities or bubbles 28 are closed and not intercommunicating with each other.

According to an embodiment, said cavities or bubbles 28 have a spherical geometry having a greater diameter where a thickness T of the insole 20 is greater and vice versa, said thickness T being measured perpendicularly to said horizontal reference plane P-P.

According to an embodiment, the density of said bubbles 28 is greater where the thickness T of the insole 20 is smaller and vice versa, said thickness T being measured perpendicular to said horizontal reference plane P-P.

According to an embodiment, said body 24 of the insole 20 delimits at least one channel 32 arranged parallel to said horizontal reference plane P-P. Said channel 32 constitutes a hollow portion and therefore causes an overall weight reduction of the insole 20.

According to an embodiment, said shell 8 is at least partially emptied of gas, so as to have one or more internal and closed cavities.

The method for making an insole and sports footwear according to the present invention will now be described.

In particular, the method for making an insole 20 of sports footwear 4, by means of injection moulding, comprises the steps of:
- arranging a mould (not shown) for said insole 20 delimiting a cavity apt to contain the insole 20 to be moulded, said cavity being counter-shaped with respect to said insole 20 itself and having a mainly planar extension parallel to said horizontal reference plane P-P,
- injecting a thermoplastic material inside said cavity,
- injecting an expanding agent in said cavity so as to cause the expansion of the injected thermoplastic material which fills said cavity,
- wherein the expanding agent causes the creation of an internal alveolar structure of the injected insole 20 comprising a plurality of cavities or bubbles 28.

Said expanding agent is preferably a gas expanding agent.

For example, said expanding agent is endothermic, but it is also possible to use an exothermic expanding agent.

By way of non-limiting example only, it is possible to use, as an expanding agent, the exothermic "Masterbachun" SE01960A of SARCO CHEMICALS.

As mentioned above, said method may comprise the step of partially emptying the insole 20 by means of gas injection inside said mould. The effect of the injected gas consists in the creation of at least one channel 32, which in fact reduces the mass amount of the body 24 of the insole 20, which is therefore lighter.

Preferably, said emptying comprises the creation of at least one channel 32 arranged parallel to said horizontal reference plane P-P.

For making sports footwear 4, the following steps are also provided:
preparing a shell or upper 8 as a function of the type of sports footwear to be made,
over-moulding by injection, at a lower side of said shell or upper 8, an insole 20 by means of injection moulding.

As shown, over-moulding is strictly applicable to sports footwear such as ski boots; it is also possible to glue or sew the insole 20 to the upper 8.

The making of the sports footwear 4 therefore comprises the step of moulding a sole 12 by injection to be associated with said insole 20, on the side opposite to the shell or upper 8.

In the case of making a shell 8 by injection, it is possible to provide for the gas emptying step, at least partial, of said shell 8 in order to reduce the overall weight of the sports footwear 4.

Some combinations of materials for making sports footwear 4 according to the present invention are indicated below for illustrative purposes only.

For example, it is possible to make the shell 8 of TPU, the insole 20 of TPU expanded with an expanding agent, the tread 16 of thermosetting rubber or TPV thermoplastic rubber.

Alternatively it is possible to make the shell 8 of PA12, the insole of expanded PA12, the tread 16 of thermosetting rubber or TPV thermoplastic rubber.

Alternatively it is possible to make the shell 8 of Pebax, the insole 20 of Pebax expanded with an expanding agent, the tread 16 of thermosetting rubber or TPV thermoplastic rubber.

Alternatively it is possible to make the shell 8 of Mafran, the insole 20 of Mafran expanded with an expanding agent, the tread 12 of thermosetting rubber or TPV thermoplastic rubber.

Finally, it is possible to make the shell 8 of PP, the insole 20 of PP expanded with an expanding agent, the tread 12 of thermosetting rubber or TPV thermoplastic rubber.

The hardnesses of the materials of the shell 8 and/or sole 12 may be varied as needed; it is also possible to use materials of different families that are compatible with each other, for example the shell 8 of Pebax, the insole 20 of PA 12, etc. In any case, the materials listed above are only illustrative and non-limiting for the purposes of the application of the present invention.

As may be appreciated from that which has been described, the present invention overcomes the drawbacks of the prior art.

In particular, the present invention solves the problem of structural fragility while maintaining a low weight.

Moreover, the production process is economical and non-polluting.

In addition, by virtue of the present invention, the cost of trimming in the wedges made of expanded PU is eliminated.

Furthermore, the need to screw the wedges to avoid movements inside the shell and consequent breakage of said wedges is eliminated: in fact, the wedge is stably anchored inside the shell.

The product is also recyclable and has a low cost.

Moreover, the solution is easily suited for use with over-injection, bi-injection, and co-injection processes.

From the point of view of the overall weight, it is observed that the present invention, when applied to footwear, allows for excellent results. In fact, if we consider, for example, a wedge for a ski boot obtained by this process, this may be over-injected directly to the shell: in this way, a considerable weight reduction is achieved because it helps to stiffen the structure of the shell, increasing the rigidity to twisting and bending thereof.

Thus, stiffness in the toe-heel areas of the footwear and sole is improved. In this way, in applications on ski boots, the security in the ski bindings is increased, allowing for a reduction in the thickness of the thermoplastic material of the shell, reducing the overall weight of the integrated shell + wedge assembly.

Finally, it is also possible to obtain an improved design of the product.

To that which is listed above we add that with this new type of construction it is possible to obtain very technical soles in other various sectors, such as, for example, high-performance hiking soles, road cycling soles and others, such as for example mountain bike soles, soles for ice/roller skates, motorcycle soles, (road, cross, speed, etc.). In practice, it is possible to obtain improved solutions for all types of soles that require high technical coefficients of rigidity and torsions, together with a low specific weight.

A person skilled in the art, for the purpose of satisfying contingent and specific needs, may make numerous modifications and variations to the solutions described above.

The scope of protection of the invention is defined by the following claims.

### List of reference numbers:

- 4:: sports footwear
- 8:: shell or upper
- 12:: sole
- 16:: tread
- 20:: insole
- 24:: body
- 28:: cavities or bubbles
- 32:: channel
- P-P:: horizontal reference plane
- T:: thickness of the insole 20

## Claims

1. Method for making an insole (20) of sports footwear (4), by means of injection molding, comprising the steps of:
- arranging a mould for said insole (20) delimiting a cavity apt to contain the insole (20) to be molded, said cavity being counter-shaped with respect to the insole (20) itself and having a mainly planar extension parallel to a horizontal reference plane (P-P),
- injecting a thermoplastic material inside said cavity,
- injecting an expanding agent in said cavity so as to cause the expansion of the injected thermoplastic material which fills said cavity,
- wherein the expanding agent causes the creation of an internal alveolar structure of the injected insole (20) comprising a plurality of cavities or bubbles (28).

2. Method for making an insole (20) of sports footwear (4) according to claim 1, wherein said cavities or bubbles (28) are closed and not intercommunicating with each other.

3. Method for making an insole (20) of sports footwear (4), according to claim 1 or 2, wherein said cavities or bubbles (28) have a spherical geometry having a greater diameter where a thickness (T) of the insole (20) is greater and vice versa, said thickness (T) being measured perpendicular to said horizontal reference plane (P-P).

4. Method for making an insole (20) of sports footwear (4), according to claim 1, 2 or 3, wherein the density of said bubbles (28) is greater where the thickness (T) of the insole (20) is smaller and vice versa, said thickness (T) being measured perpendicular to said horizontal reference plane (P-P).

5. Method for making an insole (20) of sports footwear (4) according to claim 1, 2, 3 or 4, wherein said expanding agent is a gas expanding agent.

6. Method for making an insole (20) of sports footwear (4), according to any one of claims 1 to 5, wherein said expanding agent is of the endothermic type.

7. Method for making an insole (20) of sports footwear (4), according to any one of claims 1 to 5, wherein said expanding agent is of the exothermic type.

8. Method for making an insole (20) of sports footwear (4), according to any one of claims 1 to 7, wherein said method comprises the step of partially emptying said insole (20) by means of gas injection inside said mould, wherein said emptying comprises the creation of at least one channel (32) arranged parallel to said horizontal reference plane (P-P).

9. Method for making sports footwear (4) comprising the steps of:
- preparing a shell or upper (8) as a function of the type of sports footwear (4) to be made,
- over-moulding by injection, at a lower side of said shell or upper (8), an insole (20) by means of an injection moulding method according to any one of claims 1 to 8,
- moulding a sole (12) by injection to be associated with said insole (20), on the side opposite to the shell or upper (8).

10. Method for making sports footwear (4) according to claim 9, wherein the step of arranging the shell (8) includes a step of at least partially emptying said shell (8) with gas.

11. Insole (20) for sports footwear (4) comprising a body (24) having a mainly planar extension parallel to a horizontal reference plane (P-P) and having an internal alveolar structure comprising a plurality of cavities or bubbles (28), wherein the body (24) is made of an injected and expanded thermoplastic material.

12. Insole (20) for sports footwear (4) according to claim 11, wherein said cavities or bubbles (28) have a spherical geometry having a greater diameter where a thickness (T) of the insole (20) is greater and vice versa, said thickness (T) being measured perpendicularly to said horizontal reference plane (P-P).

13. Insole (20) for sports footwear (4), according to claim 11 or 12, wherein the density of said bubbles (28) is greater where the thickness (T) of the insole (20) is smaller and vice versa, said thickness (T) being measured perpendicular to said horizontal reference plane (P-P).

14. Insole (20) for sports footwear (4) according to claim 11, 12 or 13, wherein said body (24) of the insole (20) delimits at least one channel (32) arranged parallel to said horizontal reference plane (P-P).

15. Sports footwear (4) comprising an upper or shell (8) to which an insole (20) according to any one of claims 11 to 14 is associated, wherein said insole (20) is associated with a sole (12), on the side opposite to said upper or shell (8), wherein said shell (8) is at least partially emptied of gas, so as to have one or more internal and closed cavities (28).
